# EUROPÄISCHE PATENTSCHRIFT

(11) **EP 0 902 227 B1**
(45) Veröffentlichungstag und Bekanntmachung des Hinweises auf die Patenterteilung: **24.11.1999**
(21) Anmeldenummer: 97115431.5
(22) Anmeldetag: 06.09.1997
(51) Int. Cl.: F16L 33/08

(54) **Einteiliges Gehäuse einer Schneckengewindeschelle**
One-part housing of a screw-type clamp
Boitier en une pièce d'un collier de serrage à vis

(43) Veröffentlichungstag der Anmeldung: 17.03.1999
(73) Patentinhaber: Rasmussen GmbH, D-63477 Maintal (DE)
(72) Erfinder: Sauer, Heinz, 63549 Ronneburg (DE)
(74) Vertreter: Knoblauch, Ulrich, Dr.-Ing.

(56) Entgegenhaltungen:
- DE-A- 3 431 751
- DE-C- 3 941 135
- GB-A- 2 150 205
- US-A- 4 706 346
- US-A- 5 473 798

## Beschreibung

Die Erfindung bezieht sich auf ein einteiliges Gehäuse einer Schneckengewindeschelle, mit einem gewölbten Gehäuseoberteil zur Aufnahme des Schaftes einer Spannschraube mit Kopf und zur Abstützung des Kopfes am einen Öffnungsrand des Gehäuseoberteils, mit einem Gehäuseunterteil zur Aufnahme eines mit Gewindeabschnitten versehenen Endabschnitts eines Schellenbandes unter Eingriff des Spannschraubengewindes in die Gewindeabschnitte und zur Aufnahme des anderen Endabschnitts des Schellenbandes unter formschlüssiger Verbindung mit einem Boden des Gehäuses, und mit seitlich vom Boden hochgebogenen Seitenwänden, die in Umfangsrichtung der Schelle länger als der Boden sind, wobei der Gehäuseboden beiderseits eines sich vom einen zum anderen Rand des Gehäusebodens erstreckenden mittleren Umfangsabschnitts länger als dieser Umfangsabschnitt ist und wenigstens der auf seiten des Spannschraubenkopfes liegende eine Rand des Gehäusebodens einen etwa trapezförmigen Ausschnitt aufweist.

Bei einem bekannten Gehäuse einer ähnlichen Schneckengewindeschelle dieser Art, die im Handel erhältlich ist und der DE 39 41 135 C1 entspricht, hat der Boden des Gehäuses in der Drauf- oder Unteransicht etwa die Form eines Rechtecks, wenn man von einer kurzen Zunge absieht, die am einen Rand des Bodens in Umfangsrichtung der Schelle vorsteht und den einen Rand eines Loches im radial inneren Endabschnitt des Schellenbandes übergreift. Ferner ist der Boden geringfügig radial nach außen gewölbt, so daß er weitgehend der Umfangskrümmung des mittels der Schelle auf einem Rohr oder Rohrstutzen festzuklemmenden Schlauches angepaßt ist. Da eine Schneckengewindeschelle auch zum Festklemmen von Schläuchen mit unterschiedlichen Durchmessern verwendet wird, ist man bestrebt, den Boden des Gehäuses in Umfangsrichtung der Schelle möglichst kurz zu bemessen, um mit dem gleichen Gehäuse für unterschiedliche Schlauchdurchmesser auszukommen, ohne die Krümmung des Bodens den bei unterschiedlichen Schlauchdurchmessern entsprechend unterschiedlichen Umfangskrümmungen der Schläuche anpassen zu müssen. Beim Spannen der Schelle ist die Spannschraube jedoch bestrebt, sich auf dem mit Gewindeabschnitten versehenen Endabschnitt in Drehrichtung der Spannschraube abzuwälzen und dabei die Seitenwände des Gehäuses mitzunehmen und um die Biegungen bzw. Biegekanten zwischen dem Boden und den Seitenwänden zu verbiegen, da diese Biegungen in Umfangsrichtung der Schelle verhältnismäßig kurz sind und dementsprechend ihre Biegesteifigkeit gering ist. Die Schelle darf daher nicht mit übermäßig hoher Spannkraft gespannt werden. Auch beim Lösen der Schelle, wenn die Spannschraube in entgegengesetzter Richtung gedreht wird, können Biegekräfte auf die Seitenwände des Gehäuses ausgeübt werden, wenn die Spannschraube sehr fest angezogen war oder sich sogar festgefressen hatte.

Bei der gattungsgemäßen bekannten Schelle nach DE-A-34 31 751 ist der Gehäuseboden beiderseits eines sich vom einen zum anderen Rand des Gehäusebodens erstrekkenden mittleren Umfangsabschnitts etwas länger als dieser Umfangsabschnitt. Ferner weisen die dem Kopf der Spannschraube zu- und abgekehrten Ränder des Gehäusebodens einen etwa trapezförmigen Ausschnitt auf.

Bei dieser Lösung kann die Länge des Bodens im mittleren Umfangsbereich in Umfangsrichtung der Schelle der erforderlichen Mindestlänge entsprechen, bei der der Boden - gegebenenfalls mit einer leichten Wölbung versehen - der Schlauchkrümmung in Umfangsrichtung des Schlauches auch bei unterschiedlichen Schlauchdurchmessern weitgehend angepaßt ist. Dennoch ist die Biegesteifigkeit der Seitenwände des Gehäuses im Bereich der Biegungen zwischen dem Boden und den Seitenwänden etwas höher als im zuerst geschilderten bekannten Falle, weil die Biegungen in Umfangsrichtung der Schelle länger sind und demzufolge mehr Material in den Biegungen beim Spannen der Schelle verbogen werden müßte. Im Bereich dieser Biegungen tritt das höchste Biegemoment beim Spannen oder Lösen der Spannschraube auf; da diese Biegungen nunmehr steifer sind, sind die Seitenwände durch höhere Kräfte der Spannschraube belastbar, ohne sich zu verbiegen. Der trapezförmige Ausschnitt stellt einen günstigen Kompromiß zwischen der erforderlichen Mindestlänge des Gehäusebodens im mittleren Umfangsabschnitt und einer maximalen Länge des Gehäusebodens beiderseits dieses mittleren Abschnitts dar, bei der der Gehäuseboden weiterhin einem großen Krümmungsbereich von Schläuchen mit unterschiedlichen Durchmessern weitgehend angepaßt ist, ohne seine Krümmung ändern zu müssen.

Der Erfindung liegt die Aufgabe zugrunde, ein Gehäuse der eingangs genannten Art anzugeben, dessen Seitenwände durch höhere Kräfte der Spannschraube belastbar sind, ohne sich seitlich zu verbiegen.

Erfindungsgemäß ist diese Aufgabe dadurch gelöst, daß die schrägen Abschnitte des auf seiten des Spannschraubenkopfes liegenden Randes des Gehäusebodens weitgehend den gleichen spitzen Winkel mit der Umfangsrichtung der Schelle einschließen wie in Richtung zu diesem Rand konvergierende, auf seiten seiner schrägen Abschnitte liegende erste Wände, die durch zweifache Abbiegungen des Schellenbandes beiderseits seiner Mittellinie gebildet sind. Dies hat den Vorteil, daß sich auch die schrägen Abschnitte am Schellenband abstützten, wobei eine bessere Abstützung des Gehäuses am Schellenband erreicht wird.

Sodann ist es noch günstiger, wenn sich der dem Spannschraubenkopf zugekehrte Rand des Gehäusebodens über seine gesamte Länge am Schellenband abstützt. Dadurch erstrecken sich die schrägen Abschnitte bis zu den Seitenwänden des Gehäuses, so daß der Gehäuseboden außerhalb seines mittleren Umfangsabschnitts länger wird und sich die Biegungen zwischen dem Boden und den Seitenwänden des Gehäuses noch weiter gegen ein seitliches Umbiegen der Seitenwände versteifen.

Außerdem kann dafür gesorgt sein, daß der andere Rand des Gehäusebodens ebenfalls einen trapezförmigen Ausschnitt aufweist und auf seiten dieses Randes liegende und in Richtung zu diesem konvergierende zweite Wände weiterer zweifacher Abbiegungen des Schellenbandes beiderseits seiner Mittellinie einen kleineren Winkel mit der Umfangsrichtung einschließen als die ersten Wände. Der kleinere Winkel, den die auf seiten des dem Spannschraubenkopf abgekehrten Randes liegenden zweiten Wände mit der Umfangsrichtung einschließen als die ersten Wände hat den Vorteil, daß die zweiten Wände höhere Schubkraftkomponenten des Gehäusebodens beim Spannen der Schelle aufnehmen können, ohne sich zu verformen.

Nachstehend wird ein Ausführungsbeispiel der Erfindung anhand der beigefügten Zeichnung näher beschrieben. Es zeigen:
- Fig. 1: eine Seitenansicht einer Schneckengewindeschelle mit einem erfindungsgemäßen Gehäuse, bei der das Schellenband teilweise weggebrochen ist,
- Fig. 2: den Schnitt II-II der Fig. 1,
- Fig. 3: eine perspektivische Vorderansicht des Gehäuses der Schneckengewindeschelle nach Fig. 1,
- Fig. 4: eine perspektivische Rückansicht des hinteren Teils des Gehäuses nach Fig. 3,
- Fig. 5: eine perspektivische Unteransicht der Schneckengewindeschelle nach den Fig. 1 und 2,
- Fig. 6: eine Seitenansicht des Schellenbandes vor dem Einführen in das Gehäuse, in kleinerem Maßstab,
- Fig. 7: eine Draufsicht auf das Schellenband nach Fig. 6 und
- Fig. 8: die Seitenansicht des Schellenbandes nach Fig. 5, teilweise im Längsschnitt.

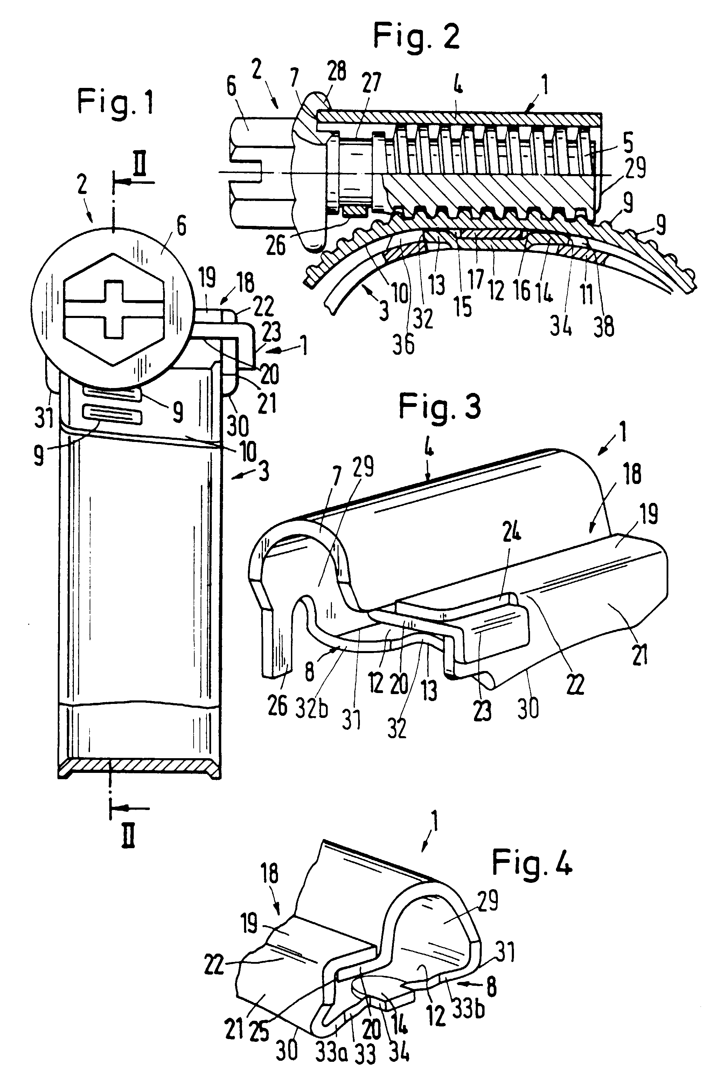

Die Schneckengewindeschelle nach den Fig. 1 bis 5 besteht aus einem Gehäuse 1, einer rechtsgängigen Spannschraube 2 und einem Schellenband 3. Alle drei Teile bestehen im wesentlichen aus Stahl. Gegebenenfalls sind sie verzinkt.

Das Gehäuse hat ein gewölbtes Oberteil 4 zur Aufnahme des mit Gewinde 5 versehenen Schaftes der Spannschraube 2 und zur Abstützung des Kopfes 6 der Spannschraube am einen Öffnungsrand 7 des Gehäuseoberteils 4. Ferner hat das Gehäuse ein Unterteil 8 zur Aufnahme des einen mit Gewindeabschnitten 9 versehenen Endabschnitts 10 des Schellenbandes 3, wobei das Spannschraubengewinde 5 in die Gewindeabschnitte 9 eingreift, wie es in Fig. 2 dargestellt ist. Ferner nimmt das Gehäuseunterteil 8 den anderen Endabschnitt 11 des Schellenbandes 2 unter formschlüssiger Verbindung mit dem Boden 12 des Gehäuses 1 auf. Zur Ausbildung dieser formschlüssigen Verbindung hat der Boden 12 an jedem seiner axialen Enden eine nach oben gedrückte Sicke 13 bzw. 14, die jeweils in ein viereckiges Loch 15 bzw. 16 in einem radial nach außen gedrückten Abschnitt des Endabschnitts 11 des Schellenbandes 3 eingreifen. Die Löcher 15 und 16 sind dabei durch einen Quersteg 17 im Endabschnitt 11 getrennt. Die Gewindeabschnitte 9 sind in den Endabschnitt 10 des Schellenbandes 3 geprägt.

Das Unterteil 8 des Gehäuses 1 hat auf der einen Längsseite einen seitlichen Ausleger 18, der das Gehäuse 1 gegen eine Drehung beim Festziehen der rechtsgängigen Spannschraube 2 abstützt. Der Ausleger hat eine obere Wand aus zwei sich überlappenden Wandabschnitten 19 und 20 und eine vom Boden 12 hochragende Seitenwand 21, die über einen umgebogenen Abschnitt 22 in den oberen (19) der sich überlappenden Wandabschnitte 19, 20 übergeht.

Der untere Wandabschnitt 20 der oberen Wand des Auslegers 18 erstreckt sich mit einem Teil 23 durch einen Ausschnitt 24 des umgebogenen Abschnitts 22 und mit einem Teil 25 (Fig. 4) bis an die Innenseite der Seitenwand 21. Der Teil 23 springt gegenüber dem Teil 25 zungenartig vor, ist auf die Außenseite der Seitenwand 21, um die axial außen und radial innen liegende Kante des Randes des Ausschnitts 24 umgebogen und endet oberhalb des Bodens 12. Er liegt auf der dem Schraubenkopf 6 zugekehrten Seite des Wandabschnitts 20 und erstreckt sich in Umfangsrichtung der Schelle über die gesamte Länge des Ausschnitts 24. Der Boden 12 ist in Umfangsrichtung der Schelle kürzer als die obere Wand 19, 20 und die Seitenwand 21.

Der Ausschnitt 24 ist bei diesem Ausführungsbeispiel ein von dem auf seiten des Spannschraubenkopfes 6 liegenden Öffnungsrand des Auslegers 18 aus in Längsrichtung des umgebogenen Abschnitts 22 ragender Schlitz, der etwa radial oberhalb des dem Schraubenkopf 6 zugekehrten Randes des Bodens 12 endet. Die radial innere in Fig. 1 und 3 unten liegende Kante des Teils 23 liegt daher im gespannten Zustand der Schelle radial außerhalb des Umfangs des eingespannten Schlauches, so daß diese Kante nicht ins Schlauchmaterial einschneidet und den Schlauch nicht beschädigen kann.

Die einander überlappenden Wandabschnitte 19, 20 erstrecken sich über die gesamte Länge des Auslegers 18 tangential zum Schellenumfang. Es ist aber auch möglich, den näher beim Schraubenkopf liegenden, sich über die Länge des Ausschnitts 24 erstreckenden Teil des oberen Wandabschnitts 19 wegzulassen, so daß sich der Ausschnitt 24 über die gesamte Breite des unteren Wandabschnitts 20 bis zum gewölbten Gehäuseoberteil 4 erstreckt. Denn jener Teil des Wandabschnitts 19 trägt weniger zur Versteifung des Gehäuses 1 bei, wie nachstehend erläutert wird.

Beim Spannen der Spannschraube 2 übt der Endabschnitt 10 des Schellenbands 3 über seine mit dem Schraubengewinde 5 in Eingriff stehenden Gewindeabschnitte 9 ein Drehmoment auf die Spannschraube 2 um eine Achse aus, die quer zur Längsachse der Spannschraube und senkrecht zur Ebene eines Umkreises des Schellenbandes steht, und zwar entgegen dem Uhrzeigersinn in Fig. 2. Dadurch ist das freie in Fig. 2 rechte Ende der Spannschraube 2 bestrebt, das Gehäuseoberteil 4 nach oben und dadurch das in Fig. 3 hintere Ende der aus den Wandabschnitten 19 und 20 bestehenden oberen Wand des Auslegers 18 ebenfalls nach oben zu drücken, so daß sich der Ausleger 18 und damit auch das Gehäuseoberteil 4 aufweiten würde. Dem wirkt jedoch entgegen, daß sich der obere Wandabschnitt 19 und auch der untere Wandabschnitt 20 bis zu dem in Fig. 3 hinteren Ende des Gehäuses 1 bzw. des Gehäuseoberteils 4 erstrecken und sich der hintere Teil 25 des unteren Wandabschnitts 20 auch an dem dort noch vorhandenen hinteren Teil des oberen Wandabschnitts 19 abstützt. Hierbei trägt der näher beim Schraubenkopf 6 liegende vordere Teil des oberen Wandabschnitts 19 weniger dazu bei, ein Hochdrücken bzw. Aufbiegen des Gehäuseoberteils 4 zu verhindern, so daß er auch entfallen könnte.

Da sich der Teil 23 des unteren Wandabschnitts 20 über die Außenseite der Seitenwand 21 nach unten in Richtung auf den Boden 12 erstreckt und an der Außenseite der Seitenwand 21 anliegt, ist zum einen sichergestellt, daß bei einer Rückdrehung der Spannschraube 2, um die Schelle zu lösen, wenn die Schraube 2 bei Ausübung einer zu hohen Spannkraft oder nach einem erheblichen Überdruck im Schlauch sehr fest sitzt, das Gehäuse 1 nicht seitlich aufgeweitet wird. Denn die Schraube 2 wälzt sich bei der Rückdrehung auf dem Endabschnitt 10 nach links in Fig. 1 ab. Dabei drückt sie einerseits den Endabschnitt 10 gegen die Seitenwand 21 und andererseits die in Fig. 1 linke Seitenwand 29 des Gehäuses 1 nach links, so daß das Gehäuse 1 in diesem Falle ohne den Teil 23 aufgeweitet würde, weil bei festsitzender, insbesondere festgefressener Schraube 2 ein höheres Drehmoment auf die Schraube 2 ausgeübt werden müßte, um sie zu lösen, als bei normal festgezogener Schraube. Zum anderen ist dadurch, daß die radial innere Kante des Teils 23 radial außerhalb des Bodens 12 bzw. höher als dieser liegt und der Teil 23 seitlich gegenüber dem Boden 12 in Umfangsrichtung versetzt ist, sichergestellt, daß diese Kante im gespannten Zustand der Schelle nicht in das Schlauchmaterial einschneidet und den Schlauch beschädigt. Ferner ist das Gehäuse 1 im nicht vom Teil 23 überlappten Bereich der Wand 21 schmaler als im Bereich des Teils 23, was bei beengten Einbauverhältnissen eine Rolle spielen kann. Schließlich kommt man im Vergleich zu einer bekannten Schnekkengewindeschelle, deren unterer Wandabschnitt der oberen Wand mit seinem umgebogenen Teil bis nahe an die radial innere Seite des Bodens 12 reicht, mit etwas weniger Material für das Gehäuse aus. Dennoch hat das Gehäuse eine höhere Festigkeit als dieses bekannte Gehäuse, da der obere Wandabschnitt 19 im Vergleich zu diesem bekannten Gehäuse eine höhere Biegesteifigkeit hat und der bei diesem bekannten Gehäuse auf die Außenseite der Seitenwand 21 umgebogene Teil des unteren Wandabschnitts der oberen Wand des Auslegers beim Spannen und im gespannten Zustand der Schelle praktisch nicht zur Versteifung des Gehäuses beiträgt.

Das Gehäuse 1 ist aus einem ungehärteten Metall hergestellt, so daß ein Rückdrehsicherungslappen 26, der am unteren Rand eines über den Boden 12 nach vorn hinausragenden Teils des Gehäuseoberteils 4 an der dem Ausleger 18 gegenüberliegenden Seitenwand des Gehäuses 1 ausgebildet ist und zunächst nach unten ragt, wie es in Fig. 3 dargestellt ist, nach dem Einführen des Schraubenschaftes in das Gehäuseoberteil 4 hochgebogen werden kann, so daß er in eine umlaufende Rille 27 der Spannschraube 2 zwischen Kopf 6 und Gewinde 5 eingreift, wie es in Fig. 2 dargestellt ist. Dieser Lappen 26 verhindert, daß sich die Spannschraube 12 beim Öffnen der Schneckengewindeschelle aus dem Gehäuse 1 herausdreht.

Der Spannschraubenkopf 6 greift ferner mit einem umlaufenden, einteilig mit dem Spannschraubenkopf 6 ausgebildeten Flansch 28 über den Öffnungsrand 7 des Gehäuseoberteils 4 hinweg, so daß sich der Spannschraubenkopf 6 beim Spannen auf dem Gehäuseoberteil 4 abstützt und auf diese Weise zusätzlich dem erwähnten Drehmoment entgegenwirkt.

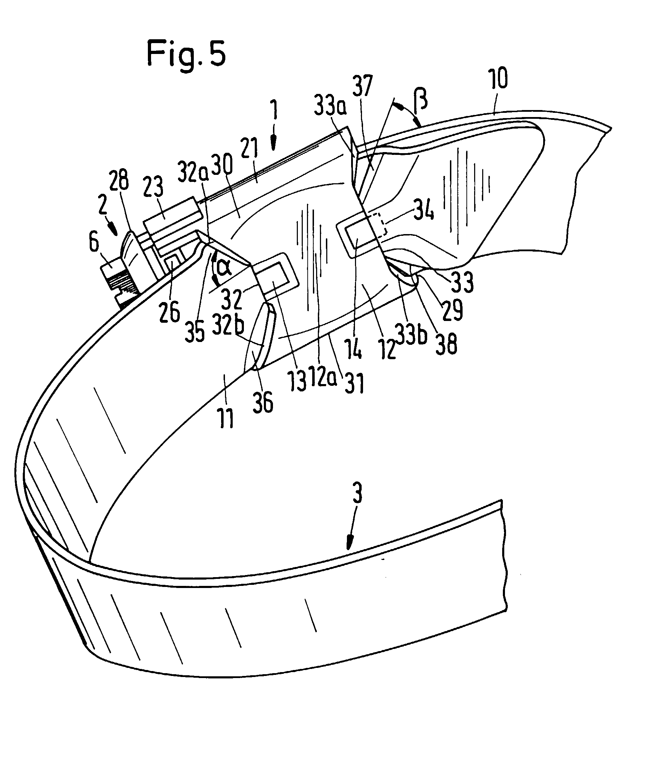

Der Boden 12 des Gehäuses 1 ist in Umfangsrichtung der Schneckengewindeschelle, weitgehend entsprechend dem Schellendurchmesser, gewölbt, so daß er weitgehend der Krümmung des einzuspannenden Schlauches angepaßt ist und die Schneckengewindeschelle im festgezogenen Zustand einen weitgehend gleichförmigen Anpreßdruck über den gesamten Umfang des Schlauches ausübt, um eine möglichst dichte Verbindung zwischen dem Schlauch und dem Endabschnitt eines Rohres oder Rohrstutzens, auf dem der Schlauch befestigt wird, zu erzielen. Hierbei ist es günstig, wenn der Gehäuseboden 12 in Umfangsrichtung der Schelle möglichst kurz ist, damit er, ohne ihn beim Spannen weiterverbiegen zu müssen, umso eher der Umfangskrümmung von Schläuchen mit unterschiedlichen Außendurchmessern angepaßt ist, da eine Schneckengewindeschelle für Schläuche mit unterschiedlichen Außendurchmessern verwendet werden kann. Eine Verkürzung des Gehäusebodens 12 in Umfangsrichtung der Schelle bewirkt jedoch gleichzeitig eine Verringerung der Biegesteifigkeit der Seitenwände 21 und 29 um ihre sich in Umfangsrichtung der Schelle erstreckenden, radial inneren Biegungen 30 und 31, wenn die Spannschraube 2 angezogen wird, da sie hierbei bestrebt ist, das gesamte Gehäuse 1 nach rechts in Fig. 1 relativ zu dem Endabschnitt 10 des Schellenbandes 3, auf dem sie sich abzurollen bestrebt ist, zu drücken. Um den Boden 12 dennoch in Umfangsrichtung der Schelle kurz ausbilden zu können, aber die Biegesteifigkeit der Seitenwände 21, 29 im Bereich der Biegungen 30, 31 nicht zu beeinträchtigen, ist der dem Schraubenkopf 6 zugekehrte Rand 32 des Bodens 12, wie Fig. 5 deutlicher zeigt, mit einem etwa trapezförmigen Ausschnitt versehen. Auch der dem Schraubenkopf 6 abgekehrte Rand 33 des Gehäusebodens 12 ist mit einem etwa trapezförmigen Ausschnitt versehen, wenn man davon absieht, daß eine relativ kurze Zunge 34 (Fig. 4) in Verlängerung der Sicke 14 am Rand 33 in Umfangsrichtung der Schelle vorsteht und den einen Rand der Öffnung 16 (Fig. 2) des inneren Endabschnitts 11 etwas übergreift.

Der Gehäuseboden 12 ist daher beiderseits eines sich von dem einen Rand 32 zum anderen Rand 33 des Gehäusebodens 12 erstreckenden mittleren Umfangsabschnitts 12a (Fig. 5) länger als dieser Umfangsabschnitt 12a. Dementsprechend sind auch die beiden Seitenwände 21 und 29, insbesondere die Biegungen 30 und 31, in Umfangsrichtung der Schneckengewindeschelle länger als der Boden 12 des Gehäuses 1. Infolgedessen ist auch die Biegesteifigkeit der Seitenwände 21 und 29 im Bereich der Biegungen 30, 31 höher als bei ebenso kurzer Ausbildung der Biegungen 30, 31 wie der erforderlichen Mindestlänge des Bodens 12 in Umfangsrichtung der Schelle, die der Länge des mittleren Abschnitts 12a entspricht. Entsprechend höher ist die Festigkeit des Gehäuses 1 gegen eine seitliche Verbiegung und/oder Aufweitung sowohl beim Spannen der Spannschraube 2 als auch beim Lösen, letzteres dann, wenn die Spannschraube 2 nach dem Spannen sehr fest sitzt, insbesondere sich festgefressen hat. Gleichzeitig ist auch die Gefahr einer Aufweitung des Gehäuses 1 radial nach außen, sei es durch ein Hochbiegen der seitlichen Umfangsbereiche des Bodens 12 oder durch ein Aufbiegen der Biegungen zwischen Gehäuseoberteil 4 und oberer Wand des Auslegers 18 und zwischen der oberen Wand und der Seitenwand 21 des Auslegers 18, erheblich vermindert.

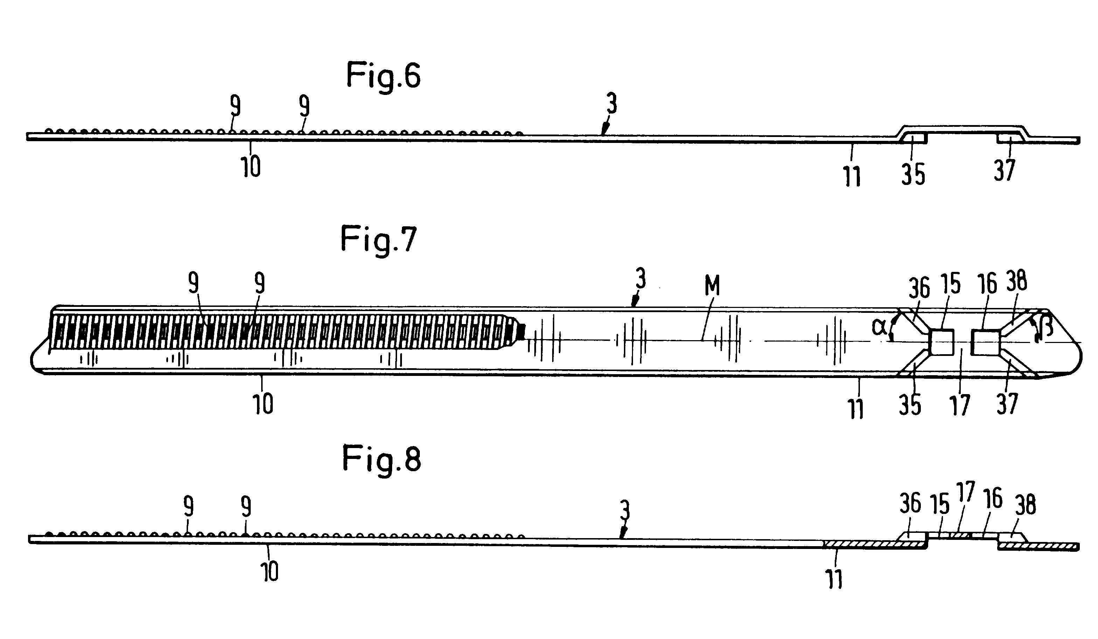

Wie die Fig. 2 und 6 bis 8 zeigen, ist der Endabschnitt 11 des Schellenbandes 3 auf seiten der schrägen Abschnitte 32a, 32b und 33a, 33b der Ränder 32 und 33, die jeweils einen spitzen Winkel mit der Umfangsrichtung der Schelle einschließen, beiderseits der Mittellinie M des Schellenbandes 3 zweifach abgebogen, d.h. von links nach rechts in Fig. 6 fortschreitend gesehen: aus der Umfangsrichtung schräg radial nach außen, dann wieder in Umfangsrichtung, dann schräg radial nach innen und schließlich wieder in Umfangsrichtung. Dadurch ergeben sich im Endabschnitt 11 des Schellenbandes zwei schräge Wände 35, 36 auf seiten des einen Randes 32 und zwei schräge Wände 37, 38 auf seiten des anderen Randes 33. Die schrägen Wände 35, 36 einerseits und die schrägen Wände 37, 38 andererseits schließen ebenso wie die schrägen Abschnitte 32a, 32b, 33a, 33b der Ränder 32, 33 des Bodens 12 einen spitzen Winkel mit der Umfangsrichtung der Schelle ein, wobei sie gemäß Fig. 7 jeweils von den Löchern 15 und 16 aus unter den Winkeln α und β zu den Längsrändern des Schellenbandes 3 hin verlaufen. Der Winkel β, den die schrägen Wände 37, 38 mit der Umfangsrichtung der Schelle und der Mittellinie M des Schellenbandes 3 einschließen, ist etwas kleiner (spitzer) als der Winkel α, den die schrägen Wände 35, 36 des Schellenbandes 3 mit der Umfangsrichtung der Schelle und der Mittellinie M einschließen, siehe Fig. 5. Dieser kleinere bzw. spitzere Winkel β, den die schrägen Wände 37, 38 mit der Umfangsrichtung der Schelle und der Mittellinie M des Schellenbandes 3 einschließen, hat den Vorteil, daß die Wände 37, 38 höhere Schubkraftkomponenten des Gehäusebodens 12 beim Spannen der Schelle aufnehmen können, ohne sich zu verformen.

Der Winkel α, den die Wände 35, 36 mit der Umfangsrichtung und der Mittellinie M des Schellenbandes 3 einschließen, ist weitgehend gleich dem Winkel, den die ihnen zugekehrten Abschnitte 32a, 32b des Randes 32 mit der Umfangsrichtung der Schelle bzw. der Mittellinie M des Schellenbandes 3 einschließen. Der Rand 32 des Gehäusebodens 12 kann sich daher über seine gesamte Länge am Schellenband 3 abstützen, wenn die Spannschraube 2 gelöst wird. Dies ist insbesondere dann von Vorteil, wenn die Spannschraube 2 sehr fest im Gehäuse 1 sitzt, sich z.B. festgefressen hat.

Der spitze Winkel, den die Abschnitte 33a, 33b des Randes 33 des Gehäusebodens 12 mit der Umfangsrichtung der Schelle und der Mittellinie M des Schellenbandes 3 einschließen, ist zwar etwas größer als der Winkel β dargestellt, er kann jedoch auch gleich dem Winkel β gewählt sein. Gegebenenfalls stützt sich auch der Rand 33 an den Wänden 37, 38 beim Spannen der Schelle ab.

## Patentansprüche

1. Einteiliges Gehäuse einer Schneckengewindeschelle, mit einem gewölbten Gehäuseoberteil (4) zur Aufnahme des Schaftes einer Spannschraube (2) mit Kopf (6) und zur Abstützung des Kopfes (6) am einen Öffnungsrand (7) des Gehäuseoberteils (4), mit einem Gehäuseunterteil (8) zur Aufnahme eines mit Gewindeabschnitten (9) versehenen Endabschnitts (10) eines Schellenbandes (3) unter Eingriff des Spannschraubengewindes (5) in die Gewindeabschnitte (9) und zur Aufnahme des anderen Endabschnitts (11) des Schellenbandes (3) unter formschlüssiger Verbindung mit einem Boden (12) des Gehäuses (1), und mit seitlich vom Boden (12) hochgebogenen Seitenwänden (21; 29), die in Umfangsrichtung der Schelle länger als der Boden (12) sind, wobei der Gehäuseboden (12) beiderseits eines sich vom einen zum anderen Rand (32, 33) des Gehäusebodens (12) erstreckenden mittleren Umfangsabschnitts (12a) länger als dieser Umfangsabschnitt (12a) ist und wenigstens der auf seiten des Spannschraubenkopfes (6) liegende eine Rand (32; 33) des Gehäusebodens (12) einen etwa trapezförmigen Ausschnitt aufweist, dadurch gekennzeichnet, daß die schrägen Abschnitte (32a, 32b) des auf Seiten des Spannschraubenkopfes (6) liegenden Randes (32) des Gehäusebodens (12) weitgehend den gleichen spitzen Winkel (α) mit der Umfangsrichtung der Schelle einschließen wie in Richtung zu diesem Rand (32) konvergierende, auf seiten seiner schrägen Abschnitte (32a, 32b) liegende erste Wände (35, 36), die durch zweifache Abbiegungen des Schellenbandes (3) beiderseits seiner Mittellinie (M) gebildet sind.

2. Gehäuse nach Anspruch 1, dadurch gekennzeichnet, daß sich der eine Rand (32) des Gehäusebodens (12) über seine gesamte Länge am Schellenband (3) abstützt.

3. Gehäuse nach Anspruch 1 oder 2, dadurch gekennzeichnet, daß der andere Rand (33) des Gehäusebodens (12) ebenfalls einen trapezförmigen Ausschnitt aufweist und auf seiten dieses Randes (33) liegende und in Richtung zu diesem konvergierende zweite Wände (37, 38) weiterer zweifacher Abbiegungen des Schellenbandes (3) beiderseits seiner Mittellinie (M) einen kleineren Winkel (β) mit der Umfangsrichtung einschließen als die ersten Wände (35, 36).

## Claims

1. A one-piece housing of a worm drive clip comprising a curved top housing portion (4) for receiving the shank of a tightening screw (2) with head (6) and for supporting the head (6) at the one edge (7) of an opening of the top housing portion (4), a bottom housing portion (8) for receiving an end portion (10), provided with screwthread portions (9), of a clip band (3), with the tightening screw screwthread (5) engaging into the screwthread portions (9), and for receiving the other end portion (11) of the clip band (3), with positively locking connection to a bottom (12) of the housing (1), and side walls (21; 29) which are bent up at the side from the bottom (12) and which are longer in the peripheral direction of the clip than the bottom (12), wherein on both sides of a central peripheral portion (12a) extending from the one edge (32, 33) of the housing bottom (12) to the other, the housing bottom (12) is longer than said peripheral portion (12a) and at least the one edge (32; 33) of the housing bottom (12), which is disposed on the side of the tightening screw head (6), has an approximately trapezoidal cut-out, characterised in that the inclined portions (32a, 32b) of the edge (32) of the housing bottom (12), which is on the side of the tightening screw head (6), include substantially the same acute angle (α) with the peripheral direction of the clip as first walls (35, 36) which converge in a direction towards said edge (32) and which are disposed on the side of the inclined portions (32a, 32b) thereof, which walls are formed by double bendings of the clip band (3) on both sides of its central line (M).

2. A housing according to claim 1 characterised in that the one edge (32) of the housing bottom (12) bears over its entire length against the clip band (3).

3. A housing according to claim 1 or claim 2 characterised in that the other edge (33) of the housing bottom (12) also has a trapezoidal cut-out and second walls (37, 38) of further double bendings of the clip band (3) on both sides of its central line (M), which walls are disposed on the side of said edge (33) and converge in a direction towards same, include a smaller angle (β) with the peripheral direction than the first walls (35, 36).

## Revendications

1. Boîtier en une seule pièce pour un collier de serrage à vis, comportant une partie supérieure de boîtier bombée (4) pour recevoir le fût d'une vis de serrage (2) qui comporte une tête (6) et pour l'appui de la tête (6) sur la bordure d'une ouverture (7) de la partie supérieure de boîtier (4), comportant une partie inférieure de boîtier (8) pour recevoir un tronçon terminal (10), d'une bande de collier (3), pourvu de secteurs de pas de vis (9), avec engagement du pas de vis (5) de la vis de serrage dans les secteurs de pas de vis (9), et pour recevoir l'autre tronçon terminal (11) de la bande de collier (3) en liaison à coopération de formes avec un fond (12) du boîtier (1), et comportant latéralement par rapport au fond (12) des parois latérales (21 ; 29) rabattues vers le haut, lesquelles sont plus longues que le fond (12) dans la direction périphérique, dans lequel le fond de boîtier (12), des deux côtés d'un tronçon périphérique médian (12a) qui s'étend d'une bordure (32) à l'autre (33) du fond de boîtier (12), est plus long que ce tronçon périphérique (12a), et au moins la bordure (32 ; 33) du fond de boîtier (12) située du côté de la tête (6) de la vis de serrage présente une entaille approximativement trapézoïdale,
caractérisé en ce que les tronçons en oblique (32a, 32b) de la bordure (32) du fond de boîtier (12) située du côté de la tête (6) de la vis de serrage enferment largement le même angle aigu (α) par rapport à la direction périphérique du collier que des premières parois (35, 36), convergentes en direction de cette bordure (32) et situées du côté de ses tronçons obliques (32a, 32b), lesdites parois étant formées par coudage double de la bande de collier (3) des deux côtés de sa ligne médiane (M).

2. Boîtier selon la revendication 1, caractérisé en ce que l'une des bordures (32) du fond de boîtier (12) s'appuie sur la bande de collier (3) sur la totalité de sa longueur.

3. Boîtier selon l'une ou l'autre des revendications 1 et 2, caractérisé en ce que l'autre bordure (33) du fond de boîtier (12) comprend également une entaille trapézoïdale, et en ce que des secondes parois (37, 38), appartenant à d'autres coudages doubles de la bande de collier (3), situées du côté de cette bordure (33) et convergeant en direction de celle-ci, enferment des deux côtés de la ligne médiane (M) de la bande de collier (3) un angle (β) plus petit par rapport à la direction périphérique que les premières parois (35, 36).
